# EUROPEAN PATENT APPLICATION

(11) **EP 1 327 934 A1**
(43) Date of publication of application: **16.07.2003**
(21) Application number: 03290090.4
(22) Date of filing: 14.01.2003
(51) Int. Cl.: G06F 9/455, H04L 12/24

(54) **Compartmented multi operator network management**

(30) Priority: 15.01.2002 US 45048
(71) Applicant: Alcatel Canada Inc., Kanata, Ontario K2K 2E6 (CA)
(72) Inventor: Marquet, Bertrand, Ottawa, Ontario K1H 1B4 (CA); Gustave, Christophe, Ottawa, Ontario K2B 8J5 (CA)
(74) Representative: Feray, Valérie

(57) **Abstract**

A system and method for providing secure access and strong separation to and between multiple operators' network management when they share network elements (12) is described. The method relies on a compartmented operating system having a number of compartments (30,32) which corresponds to the number of operators (10,18), each compartment (30,32) having its own access control. An operator (16,18) is assigned to respective compartments (30,32). There is a common operations software whereby each operator (16,18) accesses the network element (12) or management system via the access control of the compartment (30,32) assigned to that operator. Each compartment (30,32) executes the operation software for its operator (16,18) in isolation.

## Description

This invention relates to communication nodes and network management systems shared by independent operators and more particularly to systems and methods for enforcing strong separation between independent and concurrent operators.

Network elements and network management systems, in certain applications, are shared by several independent operators in carrying out independent operations. Typically, these independent operators are competitors and as such do not want other operators to have access to their network management system. In such cases the operations systems have to be tightly controlled so that security, in terms of information flow control, is maintained. In this description the term operations systems is meant as a generic reference to management and other equipment for provisioning and controlling the operation of the various network elements.

The prior art solution, typically, has been to enforce a classical security access control in order to provide a separation between the independent operators. This access control of the operations system is usually enforced by the underlying operating systems. An example of such an operating system is the Unix operating system. Typically, each operator has a different role in the system wherein each operator has a user identifier and password to bg in to the system so that they can access their particular role. However, this does not provide real separation between operation systems in the underlying operating system.

Prior art security systems is exemplified in several patent references including Japanese Patent 8263283 entitled "Software Management System" published October 11, 1996 to Hideki. The system described in the Japanese patent has a server and several terminals which are interconnected within a local area network to enable sharing of resources, i.e. programs using a network management software. Network management software has a memory which stores the recognition names of the terminals, the security information i.e. users passwords and the shared programs. Network logins are validated by the network management software through the user password while accessed programs are selectively provided to the accessing terminal through the user network rights. The system is intended to simplify network management and maintenance and to effectively prevent unauthorized program access through use of network management software.

A second prior art system is described in published PCT Application No. WO 9841038 filed December 3,1998 in the name Lagerstroem et al. This application relates to a system by which external users, such as subscribers and service providers, can update their service data in a secure and controlled manner, on a self service basis, in an intelligent network or other telecommunications network. An access system, separate from the actual telecommunications services managing network element, is implemented in the invention, the access system providing the customers and service providers with an open interface to these network elements through a public data network. The access system controls access to the actual network elements by, for example, authenticating the party requesting access, checking whether the requesting party is associated with the data they desire to manipulate and/or checking to which processing operations the requesting party is entitled. The users can thus access their own service data in the network elements managing the data in a manner controlled by the access system.

The problem with the above-referenced prior art is that they do not provide strong separation between multiple users or operators on a common management system. Furthermore, on a regular system there is often a "super user" which is able to control all of the systems and thereby bypass the access control protection between several operators.

Accordingly, in the prior art the equation is simple: one operations systems software per operator role. If there are many operators, respective instantiations of the operation software is running for each operator role on a common (shared) system and the risk of underlying, non-controlled information flow is exponential to the number of operators.

One object of the present invention is to provide a network management system sharable by a plurality of operators providing a strong separation between multiple operators and without needing a super user bypassing the access control protection between several operators.

More precisely, the present invention provides a network management system sharable by a plurality of operators, comprising:
- a compartmented operating system having a number of compartments corresponding to the plurality of operators and each compartment having access control;
- means for assigning the operators to respective compartments; and common operations software;
whereby each operator accesses the network management system via the access control of the compartment assigned to that operator and the compartment executes in isolation the operations software for its operator.

Thus, the present invention solves the aforementioned problem by enforcing mandatory access control within separate operating system compartments. Each compartment functions autonomously, each executing the operations system software separately and in isolation from the other compartments. The number of compartments within the operating system corresponds to the number of operators. Each compartment is accessible only by the operator to which it has been allocated and it is not reachable by other operators. Additionally, no "super user" is available. If there is one or a thousand operators the security of each operation software will be the same.

In accordance with a second aspect of the present invention there is provided a network element in a communications system, the network element being sharable by a plurality of operators comprising: a compartmented operating system having a number of compartments corresponding to the plurality of operators and each compartment having access control; means for assigning the operators to respective compartments; and common operations software; whereby each operator accesses the network element via the access control of the compartment assigned to that operator and the compartment executes in isolation the operations software for its operator.

In accordance with a third aspect of the present invention there is provided a method of controlling access to a network element in a communications system wherein the network element is sharable by a plurality of operators, the method comprising: providing a compartmented operating system having a number of compartments corresponding to the plurality of operators and each compartment having access control; assigning the operators to respective compartments; and providing common operations software; whereby each operator accesses the network element via the access control of the compartment assigned to that operator and the compartment executes in isolation the operations software for its operator.

The invention will now be described in greater detail with reference to the attached drawings wherein:
Figure 1 shows a prior art solution; and
Figure 2 shows an illustration of the solution provided by the present invention.

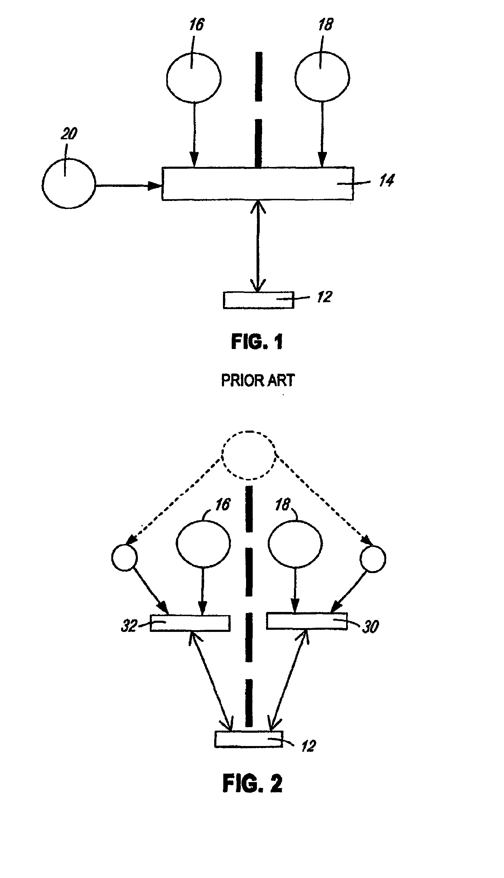

The aforementioned prior art solution is shown in Figure 1. In the prior art system a network element 12 is under the control of operations software 14 which is accessible by independent operators 16 and 18. A global administrations super user 20 is able to control the system and, in effect, bypass any access control protection which may be provided to operators 16 and 18.

The innovative solution provided by the present invention is shown in Figure 2. In this solution the common operations software is located in a compartmented operating system shown in Figure 2 as compartments 30 and 32. This compartmented system uses compartmented mode workstation (CMW) recommendation as defined by the Department of Defense (DOD) but in the Department of Defense implementation, the CMW is used to provide multilevel security. In the DOD application the CMWs provide a multilevel, multi widowing capability that permits users to have windows of different security levels opened simultaneously on their computer screens. The systems use trusted operating software to facilitate more interaction between intelligence analysts and the command staff.

In the present application the compartmented mode work station recommendation is applied to network elements and network management systems. Trusted Solaris by Sun Microsystems is an example of an operating system that can be used in the present invention.

As shown in Figure 2 network element 12 corresponds or communicates with individual compartments 30 and 32. In compartments 30 and 32 the same software code is running but is operating as two separate processes. Also, as shown in Figure 2, there is no global administration super user but separation is into specific operator administrators. Two independent operators 16, 18 are shown on Figure 2, which it is to be understood that there may be multiple operators.

As shown in Figure 2 there is no general supervision function that could be used to bypass security of information flow. Since the software is the same for every operator updates and maintenance are easier than in the prior art. The security weaknesses of the prior art are eliminated since there are no secret elements such as cryptographic keys to protect. Information flow control is ensured by a mandatory access control policy which enforces separation between compartments. Furthermore, each operator is not made aware of the existence of any other operators which may have access to the network element or management system. As noted above there is no "super user" which might be able to uncover anything related to activities of other operators in their departments.

Administration of the system may be separated into several roles. For example, one role may be dedicated to create a compartment for an operator and another role could be created for specific operator administration in each compartment.

Since the invention is based on compartmented mode work station applications it does not affect software running on classical Unix operating systems. In general, applications running on classical Sun Microsystems Solaris are compliant with the trusted solaris software discussed above. For this reason the solution described herein can be readily retrofitted into existing management systems.

In the aforementioned prior art solution separation is only achieved as the separation of role to access to the software on the underlying operating system. In the present invention the separation is associated to software and interface to network element as if the other operator does not exist.

Because of the aforementioned compartmented structure a potential disadvantage of this system is that if there is a single operator administration would be more complex. Accordingly, since the cost of security for only a single operator is not necessary the present system would be most applicable for multiple or shared operating situations.

It is contemplated that the solution discussed herein could be a new way of providing highly secured network management systems.

While particular embodiments of the invention have been described and illustrated, it will be apparent that numerous changes can be made to the concept. It is to be understood that such changes will fall within the full scope of the invention as defined in the appended claims.

## Claims

1. Network management system sharable by a plurality of operators, comprising:
a compartmented operating system having a number of compartments corresponding to the plurality of operators and each compartment having access control;
means for assigning the operators to respective compartments; and
common operations software;
whereby each operator accesses the network management system via the access control of the compartment assigned to that operator and the compartment executes in isolation the operations software for its operator.

2. Network element in a communications system, said network element being sharable by a plurality of operators comprising:
a compartmented operating system having a number of compartments corresponding to the plurality of operators and each compartment having access control;
means for assigning the operators to respective compartments; and
common operations software;
whereby each operator accesses the network element via the access control of the compartment assigned to that operator and the compartment executes in isolation the operations software for its operator.

3. Network element according to claim 2 wherein administration of said compartmented operating system is separated into multiple roles.

4. Network element according to claim 3 wherein one of said multiple roles is dedicated to creating compartments for respective operators.

5. Network element according to claim 3 wherein one of said multiple roles is dedicated to operator administration in each compartment.

6. Network element according to any one of claims 2 to 5 wherein said operations software is application software.

7. Network element according to any one of claims 2 to 6 wherein said operators are remote from said network element.

8. Method of controlling access to a network element in a communications system wherein said network element is sharable by a plurality of operators, said method comprising:
providing a compartmented operating system having a number of compartments corresponding to the plurality of operators and each compartment having access control;
assigning the operators to respective compartments; and
providing common operations software;
whereby each operator accesses the network element via the access control of the compartment assigned to that operator and the compartment executes in isolation the operations software for its operator.
